# EUROPÄISCHE PATENTANMELDUNG

(11) **EP 2 050 490 A1**
(43) Veröffentlichungstag der Anmeldung: **22.04.2009**
(21) Anmeldenummer: 07118782.7
(22) Anmeldetag: 18.10.2007
(51) Int. Cl.: B01D 39/12

(54) **Abscheidevorrichtung für Tropfen**

(71) Anmelder: Sulzer Chemtech AG, 8404 Winterthur (CH)
(72) Erfinder: Egger, Daniel, 8405 Winterthur (CH)
(74) Vertreter: Sulzer Management AG

(57) **Zusammenfassung**

Eine Vorrichtung (1) zur Abscheidung von Tropfen umfasst ein Gestrick (2) oder Gewebe, wobei das Gestrick oder Gewebe Drähte (3) umfasst, welche eine korrosionsbeständige und/oder temperaturbeständige Ummantelung (4) aufweisen.

## Beschreibung

Die Erfindung betrifft eine Vorrichtung zur Abscheidung von Tropfen mittels eines Gestrickes oder Gewebes.

Aus dem Stand der Technik ist bekannt, Tropfen mittels aus Metalldrähten aufgebauten Gestricken abzuscheiden. Derartige Metalldrähte bestehen primär aus Kostengründen zumeist aus Stahl. Deratige Stahldrähte weisen den Nachteil einer oft mangelhaften Korrosionsbeständigkeit auf und erweisen sich daher zur Abscheidung korrosiver Medien nur in begrenztem Ausmass als geeignet. Die Lebensdauer eines derartigen Stahlgestricks bei Einsatz derartiger korrosiver oder chemisch aggressiver Medien ist daher begrenzt. Wenn sich zudem auf der Oberfläche eines derartigen Gestricks Tropfen ausbilden und dort zeitweise haften bleiben, kann es zu unerwünschten Oxidationsreaktionen mit den Eisenteilchen des Stahlgestricks kommen, sodass die abzuscheidenden Tropfen einen möglicherweise nicht erwünschten und nicht genau quantifizierbaren Anteil an Reaktionsprodukten enthalten, die in nachfolgenden Verarbeitungsschritten berücksichtigt werden müssen.

Als naheliegende Alternative bietet sich an, ein derartiges Gestrick aus Kunststofffäden herzustellen, wobei ein derartiges Gestrick im wesentlichen eine sich in einer Ebene erstreckende Struktur aufweist und daher einerseits nicht wie ein aus Metalldrähten aufgebautes Gestrick periodischen Faltvorgängen unterworfen werden kann, sodass das Gestrick eine dreidimensionale Struktur erhält. Andererseits ist ein Kunststoffgestrick nur in einem relativ eng begrenzten Temperaturbereich gut einsetzbar. Bei tiefen Temperaturen treten Risse durch Versprödung auf, zu hohe Temperaturen können den Übergang in den plastischen Zustand bewirken, insbesondere bei Verwendung thermoplastischer Kunststoffe.

Somit ergibt sich das Problem, dass für viele Anwendungen, insbesondere bei Einsatz korrosiver Medien und hohen Betriebstemperaturen Gestricke gemäss des Standes der Technik an ihre Grenzen stossen. Des weiteren hat sich als nachteilig erwiesen, dass durch die Auswahl des Gestricks allein aufgrund seiner mechanischen Eigenschaften, das heisst aufgrund seiner Biegbarkeit und seiner Stabilität, sowie aufgrund seines thermischen Eigenschaften erfolgt. Gänzlich ausser Betracht musste man die Benetzbarkeit des Gestricks für das abzuscheidende Medium lassen. Es ist beispielsweise bekannt, dass sich Kunststoffflächen gut für die Abscheidung von Öltropfen eignen, hierzu siehe beispielsweise GB1409045. Metallische Oberflächen zeigen hingegen eine gute Benetzbarkeit für wässrige Medien.

Auch die Resistenz gegen Korrosion ist durch die Wahl eines Gestricks nach dem Stand der Technik vorgegeben. Korrosionsbeständigkeit ist ein wesentliches Merkmal unter anderem bei der Abscheidung wässriger Medien.

Es ist daher Aufgabe der Erfindung, einen Abscheider mit einem korrosions- und/oder temperaturbeständigen Gestrick auszustatten. Es ist eine weitere Aufgabe der Erfindung ein Gestrick vorzusehen, welches zu beliebigen dreidimensionalen Strukturen formbar ist und zudem die Formstabilität eines Metallgestricks aufweist.

Es ist eine weitere Aufgabe der Erfindung, ein Gestrick mit einer an das abzuscheidende Medium angepassten Benetzbarkeit vorzusehen.

Die Aufgabe der Erfindung wird mittels einer Vorrichtung zur Abscheidung von Tropfen gelöst, die ein Gestrick oder Gewebe umfasst, wobei das Gestrick oder Gewebe Drähte umfasst, welche eine korrosionsbeständige und/oder temperaturbeständige Ummantelung aufweisen. Ein derartiger Draht weist einen Metallkern auf, wodurch eine grosse Formstabilität des Gestricks oder Gewebes gewährleistet ist. Vorteilhafterweise besteht der Metallkern aus Stahl, besonders aufgrund der hohen Festigkeit bei gleichzeitiger Verformbarkeit. Die Ummantelung umfasst einen fluorierten Kohlenwasserstoff, insbesondere PTFE. PTFE zeichnet sich durch hohe Temperaturbeständigkeit aus. Ein bezüglich der Effizienz der Abscheidung von Tropfen besonders geeignetes Gestrick umfasst zumindest eine erste Reihe, welche aus einem derartigen Draht besteht. Durch periodische Umlenkungen werden Schlaufen ausgebildet, sodass die Reihe eine mäanderartige Struktur erhält, welche sich insbesondere insbesondere periodisch wiederholt. Zumindest die zweite Reihe aus gleichartigen Schlaufen ist vorgesehen und die erste Reihe ist mit der zweiten Reihe derart verbunden, dass die Schlaufen der ersten Reihe die Schlaufen der zweiten Reihe umgreifen. Eine derartige Schlaufe weist einen Schlaufenbogen und einen Schlaufenhals auf. Der Schlaufenbogen weist einen Scheitelpunkt auf, dessen Scheitelpunkttangente in Richtung der Längsachse der Reihe gerichtet ist. Fortschreitend auf dem Schlaufenbogen ausgehend vom Scheitelpunkt in beliebige Richtung werden ein linksseitiger und rechtsseitiger Endpunkt erreicht, deren jeweilige Tangente an den Schlaufenbogen normal auf die Scheitelpunkttangente gerichtet ist. Jeder Schlaufenbogen weist zwischen den linksseitigen und rechtsseitigen Endpunkten eine maximale Breitenabmessung auf (w1, w2). Die Breitenabmessungen (w1, w2) benachbarter Schlaufenbögen einer Reihe können unterschiedlich sein. Jeder Schlaufenhals weist eine minimale Breitenabmessung (e,c) auf, welche dem Abstand von einem rechtsseitigen Endpunkt eines ersten Schlaufenbogens zu einem linksseitigen Endpunkt eines dritten Schlaufenbogens entspricht. Der erste und dritte Schlaufenbogen sind bezüglich der Längsachse der Reihe gleichgerichtet. Zwischen dem ersten und dritten Schlaufenbogen ist eine Schlaufe gebildet, die einen Schlaufenbogen aufweist, der um die Längsachse gespiegelt ist. Die minimalen Breitenabmessungen benachbarter Schlaufenhälse einer Reihe können sich voneinander unterscheiden. Ein Schlaufenbogen einer benachbarten zweiten Reihe umgreift den Schlaufenhals eines parellel zu dem Schlaufenbogen liegenden Schlaufenbogens der ersten Reihe. Die Breitenabmessung des Schlaufenbogens (w1) ist grösser als die Breite des Schlaufenhalses (e) und der vierfachen Dicke der Schlaufe (d). An der Stelle, an welcher der Schlaufenbogen den Schlaufenhals umgreift, wird eine Öffnung ausgebildet. Die Öffnung ist von derartiger Grösse gewählt, dass in der Öffnung Tropfen koaleszieren, wobei die Öffnung insbesondere grösser als der Durchmesser eines mittleren, fallenden Tropfens und kleiner als der fünffache Durchmesser dieses Tropfens ist. Die Drähte benachbarter Reihen können unterschiedliche Dicke (d) aufweisen oder unterschiedliche Oberflächeneigenschaften haben, beispielsweise durch Verwendung verschiedener Ummantelungen, das heisst Ummantelungen, welche von der Flüssigkeit unterschiedlich stark benetzt werden oder Ummantelungen unterschiedlicher chemischer Zusammensetzung, welche für die Koaleszenz der Tropfen vorteilhaft sind. Weitere vorteilhafte Massnahmen zur Verbesserung der Abscheidegrades werden in dem nachfolgenden Ausführungsbeispiel beschrieben. Die erste Reihe ist im wesentlichen in einer Ebene angeordnet, die mit der zweiten Reihe einen Winkel grösser 0° und kleiner als 180° einschliesst, sodass benachbarte Reihen zueinander gefaltet sind.

Die Verwendung der Vorrichtung nach einem der vorhergehenden Ausführungsbeispiele erfolgt bevorzugt zur Abscheidung von Flüssigkeitstropfen aus einem Gas- oder Flüssigkeitsstrom. Die Flüssigkeitstropfen gehören dabei grösstenteils einer ersten Flüssigkeit an und bilden eine disperse Phase aus, welche in einer zweiten Flüssigkeit, die als kontinuierliche Phase ausgebildet ist, enthalten ist und darin nur eingeschränkt löslich ist. Ein derartiges Flüssigkeitsgemisch kann auch als Emulsion vorliegen. Eine besonders bevorzugte Verwendung ist die Abscheidung von Öltropfen aus einem Gasstrom. Wird daher im folgenden Text der Begriff Fluid verwendet, bezieht sich dieser Begriff ausdrücklich auf eine Flüssigkeit oder ein Gas.

### Nachfolgend wird die Erfindung anhand der Zeichnungen erläutert. Es zeigen:

Fig. 1 eine Ansicht eines Gestricks gemäss eines ersten Ausführungsbeispiels
Fig. 2 zeigt einen Schnitt durch einen Draht einer erfindungsgemässen Vorrichtung
Fig. 3 zeigt das Verhalten von einzelnen Tropfen bei Durchströmung des Gemisches.
Fig. 4 zeigt eine Darstellung der durchströmten Flächen einer Masche eines Gestricks

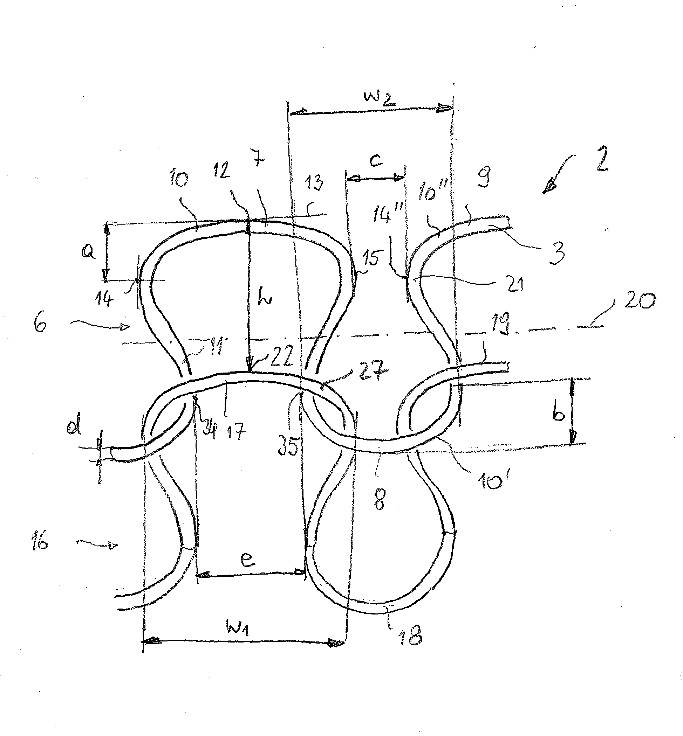

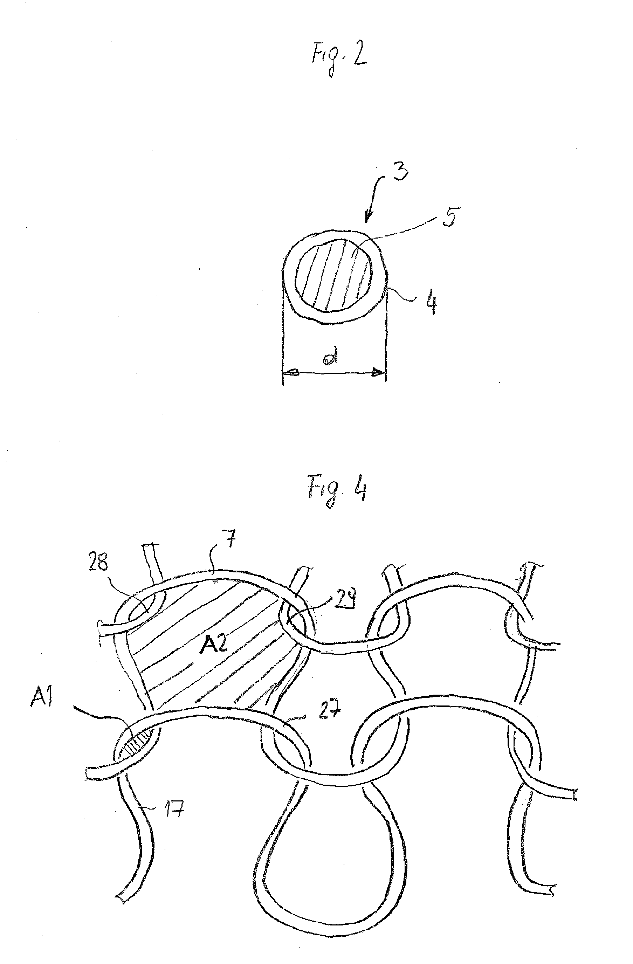

Fig. 1 zeigt einen Ausschnitt aus einem Gestrick 2 nach einem bevorzugten Ausführungsbeispiel der erfindungsgemässen Vorrichtung 1 zur Abscheidung von Tropfen. Das Gestrick umfasst Drähte 3, welche gemäss Fig. 2 eine korrosionsbeständige und/oder temperaturbeständige Ummantelung 4 aufweisen. Ein derartiger Draht 3 weist einen Metallkern 5 auf, wodurch eine grosse Formstabilität des Gestricks oder Gewebes gewährleistet ist. Vorteilhafterweise besteht der Metallkern 5 aus Stahl, besonders aufgrund der hohen Festigkeit bei gleichzeitiger Verformbarkeit dieses Werkstoffs. Die Ummantelung 4 umfasst einen fluorierten Kohlenwasserstoff, insbesondere PTFE. PTFE zeichnet sich durch hohe Temperaturbeständigkeit aus, und erlaubt auch im Einbauzustand noch Verformungen. Ein bezüglich der Effizienz der Abscheidung von Tropfen besonders geeignetes Gestrick 2 umfasst zumindest eine erste Reihe 6, welche durch den Draht 3 gebildet wird. Durch periodische Umlenkungen des Drahtes 3 werden Schlaufen ausgebildet, sodass die Reihe 6 eine mäanderartige Struktur erhält, welche sich insbesondere periodisch wiederholt. Durch die Umlenkungen werden Schlaufen (7,8,9) ausgebildet. Die Schlaufe 7 ist in Fig. 1 vollständig dargestellt, ebenso wie die Schlaufe 8, während von Schlaufe 9 nur die Hälfte sichtbar ist. Zumindest eine zweite Reihe 16 aus im wesentlichen gleichartigen Schlaufen (17,18,19) ist vorgesehen. Die erste Reihe 6 ist mit der zweiten Reihe 16 derart verbunden, dass die Schlaufen der ersten Reihe die Schlaufen der zweiten Reihe umgreifen. Eine derartige Schlaufe weist einen Schlaufenbogen 10 und einen Schlaufenhals 11 auf, was anhand der Schlaufe mit dem Bezugszeichen 7 gezeigt werden soll. Der Schlaufenbogen 10 weist einen Scheitelpunkt 12 auf, dessen Scheitelpunkttangente 13 in Richtung der Längsachse 20 der Reihe gerichtet ist. Die Längsachse 20 wird dabei als die Mittellinie eines Zylinders definiert, der die Reihe derart umhüllt, dass die Scheitelpunkte der Schlaufen die Innenwand dieses gedachten Zylinders berühren. Fortschreitend auf dem Schlaufenbogen 10 ausgehend vom Scheitelpunkt 12 in beliebige Richtung werden ein in der Darstellung gemäss Fig. 1 linksseitiger und rechtsseitiger Endpunkt (14,15) gefunden, deren jeweilige Tangente an den Schlaufenbogen 10 normal auf die Scheitelpunkttangente 13 gerichtet ist. Zwischen dem linksseitigen Endpunkt 14 und dem rechtsseitigen Endpunkt 15 erstreckt sich die maximale Breitenabmessung (w1, w2) des Schlaufenbogens 10. Die Breitenabmessungen (w1, w2) benachbarter Schlaufenbögen einer Reihe können unterschiedlich sein. Jeder Schlaufenhals 11 weist eine minimale Breitenabmessung (e,c) auf, wobei die Breitenabmessung (c ) dem Abstand von einem rechtsseitigen Endpunkt 15 eines ersten Schlaufenbogens 10 zu einem linksseitigen Endpunkt 14" eines dritten Schlaufenbogens 10" entspricht. Die minimale Breitenabmessung (e ) ist der Abstand der beiden Endpunkte 34, 35, wobei in Fig. 1 die minimalen Breitenabmessungen (e ) der bezüglich der Längsachse 20 parallel angeordneten Schlaufen der ersten und zweiten Reihen gleich sind.

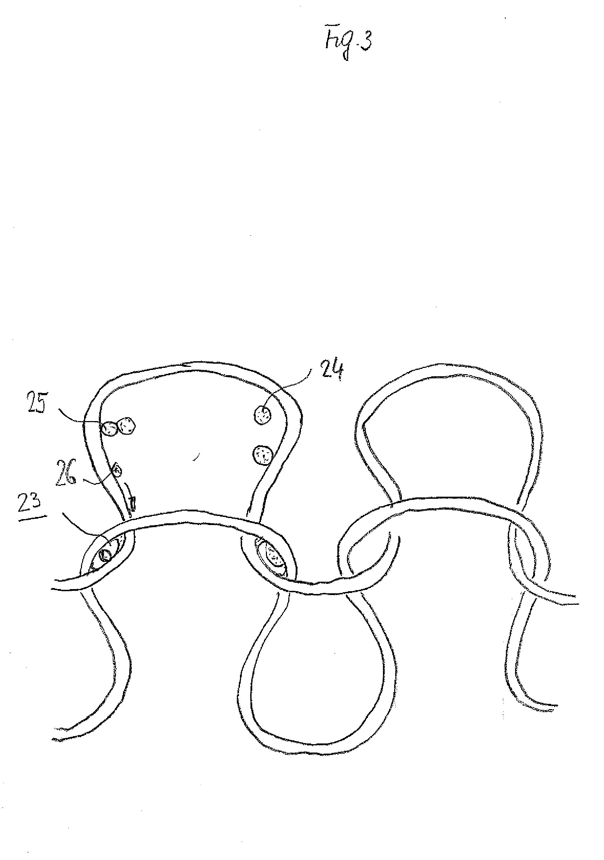

Der erste und dritte Schlaufenbogen (10,10") sind bezüglich der Längsachse 20 der Reihe gleichgerichtet und zwischen dem ersten und dritten Schlaufenbogen ist eine Schlaufe 8 gebildet, die einen Schlaufenbogen 10' aufweist, der um die Längsachse 20 gespiegelt ist. Die minimalen Breitenabmessungen (e,c) benachbarter Schlaufenhälse (11,21) einer Reihe können sich voneinander unterscheiden. Ein Schlaufenbogen 17 einer benachbarten zweiten Reihe umgreift den Schlaufenhals 11 eines parallel zu dem Schlaufenbogen 17 liegenden Schlaufenbogens 10 der ersten Reihe. Die Breitenabmessung des Schlaufenbogens 10 (w1) ist grösser einerseits als die Breitenabmessung des Schlaufenhalses 11 (e) und andererseits der vierfachen Dicke der Schlaufe (d). Die Dicke der Schlaufe ist dabei gleich dem Durchmesser des ummantelten Drahtes 3 gemäss Fig. 2. Der Abstand h zweier benachbarter Reihen, gemessen als Abstand zwischen den Scheitelpunkten (12,22) der Schlaufen (7,17) wird mit h bezeichnet. Sind benachbarte Reihen aus gleichen Schlaufen ausgebildet, ist auch der Abstend der beiden Längsachsen voneinander durch die Grösse (h) vorgegeben. Der Normalabstand zwischen dem Scheitelpunkt 12 des Schlaufenbogens 10 und dem Endpunkt 14 hat das Mass (a). Bei symmetrischer Ausführung des Schlaufenbogens gilt dies in gleicher Weise für den Endpunkt 15. An der Stelle, an welcher der Schlaufenbogen 17 den Schlaufenhals 11 umgreift, wird zumindest eine Öffnung 23 ausgebildet, wie insbesondere in Fig. 3 gezeigt ist. Die Öffnung 23 ist von derartiger Grösse, dass im Inneren der Öffnung Tropfen koaleszieren können. In Fig. 3 ist eine Anzahl Tropfen (24,25,26) gezeigt. Tropfen 24 befindet sich frei schwebend in einem das Gestrick durchströmenden Fluidstrom, Tropfen 25 lagert sich an der Oberfläche des Gestricks an, Tropfen 26 fliesst entlang des Gestricks in Richtung des Öffnung 23. Unterwegs können sich weitere Tropfen anlagern, was für Tropfen 25 schematisch dargestellt ist. In der Öffnung findet eine Koaleszenz der dort auftreffenden, sowie über die Drähte ankommenden Tropfen statt. Hierdurch bildet sich ein Tropfen grösseren Durchmessers, welcher sich von der Öffnung ablöst, wenn sein Gewicht die durch das Fluid auf ihn einwirkenden Auftriebskräfte übersteigt. Die Grösse des sich ablösenden Tropfens wird dabei unter anderem von der Fluidgeschwindigkeit bestimmt. Für die meisten Ausführungsbeispiele ist die Öffnung gleich oder grösser als der Durchmesser eines mittleren, fallenden Tropfens.

Fig. 4 zeigt eine Darstellung von fluiddurchströmten Querschnittsflächen einer Masche des Gestricks, sowie weitere Maschen. Die fluiddurchstömte Querschnittsfläche A2, die durch Schraffur gekennzeichnet ist, befindet sich innerhalb des Schlaufenbogens 7. Nähert sich der Zahlenwert für die Querschnittsfläche A1, die von der Schlaufe 7 sowie dem Schlaufenbogen 27 der Schlaufe 17 begrenzt ist, der von der Schlaufe 7, dem Schlaufenbogen 27 sowie benachbarter Schlaufenteile (28,29) eingeschlossenen Fläche A2, werden die Abstände der Drähte zu gross, als dass sich zwischen den Drähten Tropfen anlagern und koaleszieren können. Die Drähte benachbarter Reihen können unterschiedliche Dicke (d) aufweisen oder unterschiedliche Oberflächeneigenschaften haben, beispielsweise durch Verwendung verschiedener Ummantelungen, das heisst Ummantelungen, welche von der Flüssigkeit unterschiedlich stark benetzt werden oder Ummantelungen unterschiedlicher chemischer Zusammensetzung, welche für die Koaleszenz der Tropfen vorteilhaft sind. Werden Drähte aus verschiedenen Materialien miteinander zu einem Gestrick verbunden, ist es vorteilhaft, wenn deren Oberflächeneigenschaften, insbesondere deren freie Oberflächenenergien unterschiedlich sind. Diese freie Oberflächenenergie wird mit durch die Anzahl freier Elektronen auf der Oberfläche beeinflusst.. So weisen beispielsweise Metalle eine Vielzahl freier Elektronen auf, welche die Anlagerungen von Substanzen mit polaren Bindungen begünstigt. Ein Fluid mit derartig ausgeprägtem Dipolcharakter ist beispielsweise Wasser. Hingegen liegen bei Kunststoffen zumeist in kovalente Bindungen vor, die beispielsweise bie C-H Verbindungen allenfalls schwache Polarität aufweisen. Hierdurch wird die Anlagerung von Substanzen, begünstigt, die Bindungen von ähnlich geringer Polarität aufweisen Insbesondere eine Kombination von Materialien mit einer hoher und einer niedrigen freien Oberflächenergie können die Effizienz der Trennung positiv beeinflussen, und zwar unabhängig davon, welche Phase im Fluidstrom in disperser Form auftritt. Zudem wird die Geschwindigkeit der Abscheidung durch erhöhte Koaleszenzrate vergrössert, wenn die Tropfen im Bereich von Verbindungspunkten von Drähten zweier unterschiedlicher Materialien anhaften und koaleszieren. Weitere vorteilhafte Massnahmen zur Verbesserung der Abscheidegrades werden in dem nachfolgenden Ausführungsbeispiel beschrieben. Die erste Reihe in einer Ebene, die mit der zweiten Reihe einen Winkel grösser 0° und kleiner als 180° einschliesst, sodass benachbarte Reihen zueinander gefaltet sind. Diese Faltung hat insbesondere den Vorteil, dass sich an den Schlaufen (7,8,9) anlagernde Tropfen entlang des Drahtes bis zu einer Öffnung 23 auf einer zur Horizontalen geneigten Oberfläche abfliessen können.

Die Summe aller Reihen bilden eine Lage eines Gestricks aus. Selbstverständlich kann eine Mehrzahl von Lagen übereinander angeordnet werden. Eine einzelne Lage kann dabei aus einem Metalldraht (a1) bestehen, einem ummantelten Metalldraht (a2) oder einer Kombination von Metalldraht und einem ummantelten Metalldraht (a3). Vorteilhafterweise ist jede einzelne Lage gefaltet. Für eine Mehrzahl von Lagen kann jede beliebige Kombination von a1,a2, a3 zum Einsatz kommen.

Die Verwendung der Vorrichtung nach einem der vorhergehenden Ausführungsbeispiele erfolgt bevorzugt zur Abscheidung von Öltropfen aus einem Gasstrom.

## Patentansprüche

1. Vorrichtung (1) zur Abscheidung von Tropfen umfassend ein Gestrick (2) oder Gewebe, **dadurch gekennzeichnet, dass** das Gestrick oder Gewebe Drähte (3) umfasst, welche eine korrosionsbeständige und/oder temperaturbeständige Ummantelung (4) aufweisen.

2. Vorrichtung nach Anspruch 1, wobei der Draht (3) einen Metallkern (5) aufweist.

3. Vorrichtung nach Anspruch 2, wobei der Metallkern (5) aus Stahl besteht.

4. Vorrichtung nach einem der vorhergehenden Ansprüche, wobei die Ummantelung (4) einen fluorierten Kohlenwasserstoff, insbesondere PTFE umfasst.

5. Vorrichtung nach einem der vorhergehenden Ansprüche, wobei das Gestrick (2) zumindest eine erste Reihe (6) umfasst, welche durch den Draht (3) derart gebildet ist, dass durch periodische Umlenkungen Schlaufen (7,8,9) gebildet werden und zumindest eine zweite Reihe (16) gleichartiger Schlaufen (17,18,19) ausgebildet ist und die erste Reihe (6) mit der zweiten Reihe (16) derart verbunden ist, dass die Schlaufen der ersten Reihe (6) die Schlaufen der zweiten Reihe (16) umgreifen.

6. Vorrichtung nach Anspruch 5, wobei zumindest ein Teil der Schlaufen einen Schlaufenbogen (10) und einen Schlaufenhals(11) aufweist.

7. Vorrichtung nach Anspruch 6, wobei der Schlaufenbogen (10) einen Scheitelpunkt aufweist (12), dessen Scheitelpunkttangente (13) in Richtung der Längsachse (20) der Reihe (6) gerichtet ist.

8. Vorrichtung nach Anspruch 7, wobei durch Fortschreiten auf dem Schlaufenbogen (10) ausgehend vom Scheitelpunkt (12) in beliebige Richtung ein linksseitiger und rechtsseitiger Endpunkt (14,15) gefunden werden, deren jeweilige Tangente an den Schlaufenbogen (10) normal auf die Scheitelpunkttangente (13) gerichtet ist.

9. Vorrichtung nach Anspruch 8, wobei der Schlaufenbogen (10) zwischen den linksseitigen und rechtsseitigen Endpunkten (14, 15) eine maximale Breitenabmessung aufweist (w1, w2).

10. Vorrichtung nach Anspruch 8 oder 9, wobei die Breitenabmessungen (w1, w2) benachbarter Schlaufenbögen einer Reihe unterschiedlich sind.

11. Vorrichtung nach Anspruch 8, wobei der Schlaufenhals (11,21) eine minimale Breitenabmessung (e,c) aufweist, welche dem Abstand von einem rechtsseitigen Endpunkt (15) des ersten Schlaufenbogens (10) zu einem linksseitigen Endpunkt (14") des dritten Schlaufenbogens (10") entspricht und der erste und dritte Schlaufenbogen (10, 10") bezüglich der Längsachse der Reihe gleichgerichtet sind und zwischen dem ersten und dritten Schlaufenbogen eine Schlaufe (8) gebildet ist, die einen Schlaufenbogen (10') aufweist, der um die Längsachse (20) gespiegelt ist.

12. Vorrichtung nach Anspruch 11, wobei die minimalen Breitenabmessungen (e,c) benachbarter Schlaufenhälse einer Reihe sich voneinander unterscheiden.

13. Vorrichtung nach einem der Ansprüche 6 bis 12, wobei ein Schlaufenbogen (27) der zweiten Reihe (16) den Schlaufenhals (11) der parallel liegenden Schlaufe (7) der ersten Reihe (6) umgreift.

14. Vorrichtung nach Anspruch 13, wobei die Breitenabmessung des Schlaufenbogens (w1) grösser als die Breite des Schlaufenhalses (e) und der vierfachen Dicke der Schlaufe (d) ist.

15. Vorrichtung nach Anspruch 13 oder 14, wobei an der Stelle, an welcher der Schlaufenbogen (27) den Schlaufenhals (11) umgreift, zumindest eine Öffnung (23) ausgebildet wird.

16. Vorrichtung nach Anspruch 15, wobei die Öffnung (23) von derartiger Grösse gewählt ist, dass in der Öffnung Tropfen koaleszieren.

17. Vorrichtung nach Anspruch 16, wobei die Öffnung (23) grösser als der Durchmesser eines mittleren, fallenden Tropfens und kleiner als der 10-fache Durchmesser dieses Tropfens ist.

18. Vorrichtung nach einem der Ansprüche 5 bis 13, wobei die erste Reihe (6) in einer ersten Ebene liegt, und die zweite Reihe (16) in einer zweiten Ebene liegt, und die beiden Ebenen zueinander einen Winkel grösser 0° und kleiner als 180° einschliessen, sodass benachbarte Reihen zueinander gefaltet sind.

19. Vorrichtung nach einem der vorhergehenden Ansprüche, wobei die Drähte (3) benachbarter Reihen (6,16) unterschiedliche Dicke (d) aufweisen.

20. Vorrichtung nach einem der vorhergehenden Ansprüche, wobei die Drähte (3) benachbarter Reihen (6,16) unterschiedliche Oberflächeneigenschaften haben, beispielsweise verschiedene Ummantelungen.

21. Vorrichtung nach einem der vorhergehenden Ansprüche, wobei eine Mehrzahl benachbarter Reihen eine Lage ausbilden.

22. Vorrichtung nach Anspruch 21, wobei das Gestrick eine Mehrzahl von Lagen umfasst

23. Verwendung der Vorrichtung nach einem der vorhergehenden Ansprüche zur Abscheidung von Tropfen aus einem Fluidstrom.
